# EUROPÄISCHE PATENTSCHRIFT

(11) **EP 1 562 816 B1**
(45) Veröffentlichungstag und Bekanntmachung des Hinweises auf die Patenterteilung: **07.06.2006**
(21) Anmeldenummer: 03810939.3
(22) Anmeldetag: 07.10.2003
(51) Int. Cl.: B62B 3/14

(54) **STAPELBARER EINKAUFSWAGEN**
STACKABLE SHOPPING CART
CHARIOTS DE SUPERMARCHES EMPILABLES

(30) Priorität: 09.11.2002 DE 20217285 U
(43) Veröffentlichungstag der Anmeldung: 17.08.2005
(73) Patentinhaber: WANZL METALLWARENFABRIK GMBH, D-89336 Leipheim (DE)
(72) Erfinder: SCHEFFLER, Hans, 89233 Neu-Ulm/Burlafingen (DE)
(86) Internationale Anmeldenummer: PCT/DE2003/003316
(87) Internationale Veröffentlichungsnummer: WO 2004/043763

(56) Entgegenhaltungen:
- US-A- 2 931 662
- US-A- 3 157 410
- US-A- 3 963 255
- US-A- 4 125 270

## Beschreibung

Die Erfindung betrifft einen stapelbaren Einkaufswagen, mit einem zur Aufnahme von Ware bestimmten Korb, dessen Rückseite durch eine in das Korbinnere verschwenkbare, zur Aufnahme eines Kleinkindes bestimmte Klappe gebildet ist, die eine mit Beinöffnungen ausgestattete Stützwand, eine an der Stützwand um eine horizontale Achse schwenkbar gelagerte, mit vertikalen Stäben ausgestattete Rückwand und eine Sitzplatte aufweist, die an der Stützwand um eine horizontale Achse bewegbar gelagert ist und unter Abstützung an der Rückwand diese mit Hilfe von Stützfingern so hintergreift, dass jeder Stützfinger an einem vertikalen Stab anliegt, wobei in Gebrauchslage der Klappe, in der diese zur Aufnahme eines Kleinkindes geeignet ist, die Rückwand von der Stützwand weggeschwenkt ist und in Nichtgebrauchslage der Klappe an der Stützwand anliegt.

Einkaufswagen dieser Art sind in der US-A-4,125,270 und im "Katalog Nr. 1, Einkaufswagen", Prospekt Nr. DS 11/97, der Anmelderin abgebildet. Die Klappen dieser Einkaufswagen weisen zwei Nachteile auf. Ein erster Nachteil besteht darin, dass die aus elastischem Kunststoff bestehende Sitzplatte bei Ihrer Montage ein Stück weit verbogen werden muss, um diese an der Stützwand und an der Rückenlehne befestigen zu können. Man erspart sich dadurch separate Befestigungsmittel. Der zweite Nachteil macht sich darin bemerkbar, dass beim platzsparenden Ineinanderschieben von Einkaufswagen die Sitzplatte eines Einkaufswagens durch das stapelbedingte Anheben der Klappen hin und wieder mit einem benachbarten Einkaufswagen verhaken kann, so dass die Entnahme von Einkaufswagen aus einem Stapel erschwert wird. Das Verhaken ist deshalb möglich, weil sich in Nichtgebrauchslage der Klappe die Sitzplatte größtenteils an der Außenseite der Rückenlehne befindet und die Sitzplatte aufgrund der gewählten Kinematik bereits bei einem leichten Öffnen der Klappe relativ weit von der Außenseite der Rückenlehne absteht. Dieses Abstehen kann das eben genannte schädliche Verhaken mit Teilen eines benachbarten in den Stapel eingeschobenen Einkaufswagen bewirken. Löst man einen derart verhakten Einkaufswagen mit Gewalt von einem Stapel, sind Beschädigungen die unausweichliche Folge.

Es ist Aufgabe der Erfindung, die Klappe eines Einkaufswagens der hier vorliegenden Art so weiterzuentwickeln und zu verbessern, dass der Montageaufwand zum Anbringen der Sitzplatte an der Klappe verringert und somit die Montagekosten reduziert werden. Ferner soll die Sitzplatte an der Klappe so angeordnet sein, dass beim Ineinanderschieben gleicher Einkaufswagen am Verhaken der Sitzplatte ausgeschlossen ist.

Die Lösung der Aufgabe besteht darin, dass zwischen zwei benachbarten vertikalen Stäben der Rückwand eine Erweiterung vorgesehen ist, die beim Zusammenbau der Klappe zum Hindurchführen von einem der Stützfinger bestimmt ist und dass beim Verschwenken der Rückwand die Sitzplatte mit ihrem an die Rückwand angrenzenden Rand an der Innenseite der Rückwand entlanggleitet.

Bei der aufgefundenen Lösung braucht die Sitzplatte beim Zusammenbau der Klappe nicht mehr gewaltsam verbogen werden. Vielmehr ist es in vorteilhafter Weise möglich, die Sitzplatte auf Höhe der Erweiterung mit den Stützfingern voraus zwischen die entsprechenden vertikalen Stäbe der Rückwand einzufügen, ein kurzes horizontales Verschieben der Sitzplatte durchzuführen und anschließend die Sitzplatte entlang der vertikalen Stäbe ein Stück weit nach unten zu bewegen. Abschließend erfolgt dann wie später noch beschrieben, das Einrasten der Sitzplatte an der Stützwand.
Die vorgeschlagene Lösung lässt einen weiteren Vorteil entstehen, der darin besteht, dass beim Verschwenken der Rückwand die Sitzplatte immer mit ihrem an die Rückwand angrenzenden Rand an der Innenseite der Rückwand entlang gleitet. Ganz gleich, in welcher Lage sich die Stützwand und die Rückwand befinden, die Sitzplatte befindet sich immer zwischen der Stützwand und der Rückwand. Sie kann deshalb beim Stapeln mit einem weiteren Einkaufswagen nicht verhaken, weil sie von der Stützwand und der Rückwand umschlossen ist.

Die Erfindung wird anhand von Ausführungsbeispielen näher beschrieben. Es zeigt
- Fig. 1: einen stapelbaren Einkaufswagen;
- Fig. 2: eine Klappe in Gebrauchslage sowie
- Fig. 3: eine teilweise geschlossene Klappe.

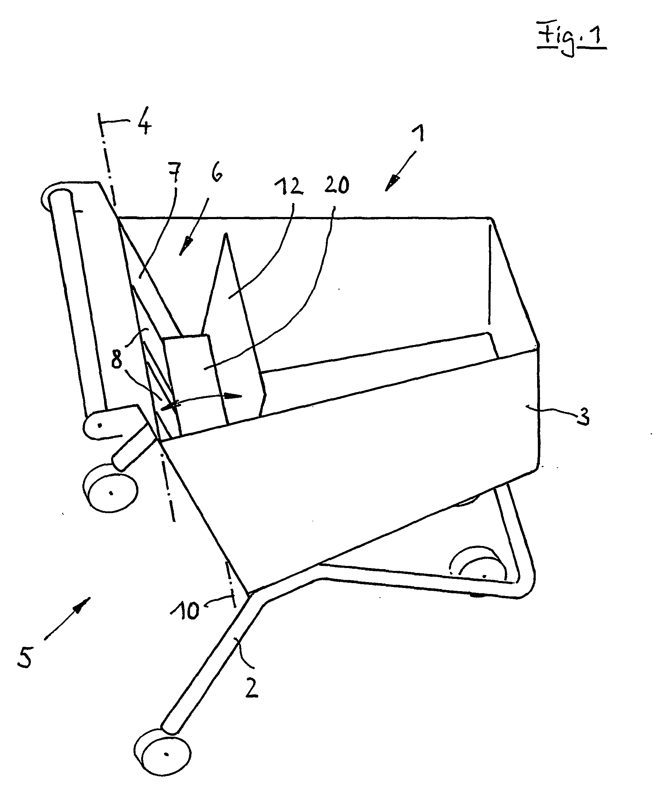

Fig. 1 zeigt einen Einkaufswagen 1 der üblichen bekannten Bauart. Das Fahrgestell 2 und der Korb 3 sind konisch gestaltet und die Rückseite 5 des Korbes 3 ist um eine oben liegende horizontale Achse 4 in das Korbinnere verschwenkbar. Ein derart gestalteter Einkaufswagen 1 lässt sich mit gleichen Einkaufswagen 1 platzsparend ineinanderschieben, also stapeln. Die Rückseite 5 des Korbes 3 ist als sogenannte Klappe 6 ausgebildet, das heißt, die Klappe 6 weist eine Stützwand 7 und eine Rückwand 12 auf, die eine Sitzplatte 20 tragen, so dass eine solche Klappe 6 in der Lage ist, ein Kleinkind in sitzender Stellung aufzunehmen, wobei zu diesem Zweck die Stützwand 7 mit zwei Beinöffnungen 8 ausgestattet ist. Die Rückwand 12 ist an der Stützwand 7 um eine unten liegende horizontale Achse 10 schwenkbar gelagert und lässt sich aus einer Gebrauchslage, wie gezeichnet, an die Stützwand 7 heran- und wieder zurückschwenken, siehe Doppelpfeil, wobei dann die Sitzplatte 20 entsprechende Ausweichbewegungen ausführt.

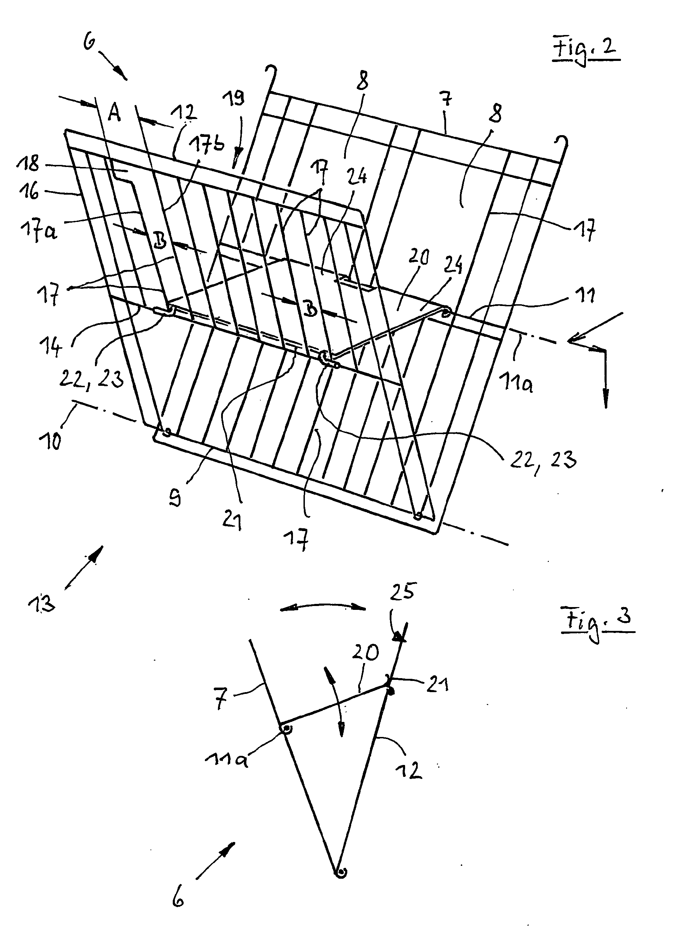

Fig. 2 zeigt eine in Gebrauchslage befindliche Klappe 6 mit Blick auf die Außenseite 13 der Rückwand 12. Man erkennt die unten an der Stützwand 7 befindliche, durch einen Querstab 9 gebildete horizontale Achse 10, an der die Rückwand 12 verschwenkbar gelagert ist. Man erkennt ferner die beiden in der Stützwand 7 befindlichen Beinöffnungen 8 für ein Kleinkind. Am unteren Rand der Beinöffnungen 8 weist die Stützwand 7 einen Querstab 11 auf. Die Beinöffnungen 8 werden durch vertikale Stäbe 17 begrenzt, die unterhalb des Querstabes 11 einen Großteil der Stützwand 7 bilden. Am Querstab 11 ist die bevorzugt aus Kunststoff bestehende Sitzplatte 20 schnappschlüssig aufgesetzt. Die Rückwand 12 weist ebenfalls einen Querstab 14 auf, von dem aus vertikale Stäbe 17 nach oben führen. Die vertikalen Stäbe 17 bilden einen Großteil der oberen Hälfte der Rückwand 12. Sie bilden auch eine Rückenlehne 19 für ein Kleinkind. An dem an die Rückwand 12 angrenzenden Rand 21 der Sitzplatte 20 sind zwei Stützfinger 22 vorgesehen und spiegelbildlich angeordnet. Die Stützfinger 22 sind jeweils zwischen zwei vertikalen Stäben 17 hindurchgeführt und hintergreifen mit einem horizontal sich erstreckenden Vorsprung 23 je einen vertikalen Stab 17. Die Stützfinger 22 liegen ferner am Querstab 14 auf, so dass die Sitzplatte 20 in Gebrauchslage der Klappe 6 ausreichend nach unten hin abgestützt ist. Der in der Zeichnung links gelegene, von einem Stützfinger hintergriffene vertikale Stab 17a ist im oberen Bereich der Rückwand zum näher gelegenen, von oben nach unten führenden Rand 16 der Rückwand 12 nach außen hin abgekröpft oder abgebogen, so dass dadurch zusammen mit dem benachbarten, in der Zeichnung weiter rechts befindlichen vertikalen Stab 17b eine Erweiterung 18 gebildet ist, deren horizontal gemessene Breite A größer ist als die zwischen den vertikalen Stäben 17 gleichermaßen gemessene Distanz B. Die Erweiterung 18 erleichtert das Zusammenfügen der Sitzplatte 20 mit der Rückwand 12. Beim Zusammenbau einer Klappe 6 wird zuerst die Rückwand 12 am unten liegenden Querstab 9 der Stützwand 7 auf geeignete Weise gelenkig befestigt. Anschließend wird die Sitzplatte 20 mit ihren Stützfingern 22 voraus durch die jeweils beiden dafür vorgesehenen vertikalen Stäbe 17a und 17b sowie 17 hindurchgeführt, wobei der in der Zeichnung links dargestellte Stützfinger 22 die Erweiterung 18 passiert. In dieser Lage muss mit der Sitzplatte 20 eine horizontale Bewegung -in der Zeichnung nach rechts- durchgeführt und dann die Sitzplatte 20 ein Stück weit nach unten bewegt werden und zwar so weit, dass sich die Stützfinger 22 in den mit dem Maß. B gekennzeichneten Bereichen befinden. Schwenkt man nun die Stützwand 7 ein Stück weit an die Rückwand 12 heran, lässt sich die Sitzplatte 20 mit ihren beiden Abschnitten 24 schnappschlüssig auf den Querstab 11 aufsetzen, so dass die Sitzplatte 20 an der Stützwand 7 gelenkig arretiert ist, siehe rechts dargestellte Pfeilfolge. Bewegt man dann die Stützwand 7 von der Rückwand 12 weg, wandern die Stützfinger 22 und damit die Sitzplatte 20 so weit nach unten, bis die Stützfinger 22 am Querstab 14 auf- und gleichzeitig an ihren vertikalen Stäben 17a und 17 anliegen. In dieser Lage nimmt die Klappe 6 ihre Gebrauchslage ein.

In einer Seitenansicht zeigt Fig. 3 die Klappe 6, wobei die Rückwand 12 ein Stück weit zur Stützwand 7 herangeschwenkt ist. Die Anordnung ist wieder so gewählt, wie in Fig. 1 dargestellt. Die Kinematik zwischen Stützwand 7, Rückwand 12 und Sitzplatte 20 ist, wie bereits in Fig. 2 beschrieben, so gewählt, dass beim Heranschwenken der Rückwand 12 an die Stützwand 7 die Sitzplatte 20 um die horizontale Achse 11 a nach oben wandert, wobei sie mit ihrem an die Rückwand 12 angrenzenden Rand 21 an der Innenseite 25 der Rückwand 12 entlang gleitet.

Es können an der Sitzplatte 20 mehr als zwei Stützfinger 22 und mehr als zwei Abschnitte 24 vorgesehen sein. Auch können die Vorsprünge 23 der Stützfinger 22 hakenförmig so geformt sein, dass diese in Gebrauchslage der Klappe 6 den Querstab 14 der Rückwand 7 hintergreifen und somit zusätzlich dazu beitragen, dass die Rückwand 7 in Gebrauchslage der Klappe 6 ausreichend abgestützt ist.

## Patentansprüche

1. Stapelbarer Einkaufswagen (1), mit einem zur Aufnahme von Ware bestimmten Korb (3), dessen Rückseite (5) durch eine in das Korbinnere verschwenkbare, zur Aufnahme eines Kleinkindes bestimmte Klappe (6) gebildet ist, die eine mit Beinöffnungen (8) ausgestattete Stützwand (7), eine an der Stützwand (7) um eine horizontale Achse (10) schwenkbar gelagerte, mit vertikalen Stäben (17) ausgestattete Rückwand (12) und eine Sitzplatte (20) aufweist, die an der Stützwand (7) um eine horizontale Achse (11a) bewegbar gelagert ist und unter Abstützung an der Rückwand (12) diese mit Hilfe von Stützfingern (22) so hintergreift, dass jeder Stützfinger (22) an einem vertikalen Stab (17) anliegt, wobei in Gebrauchslage der Klappe (6), in der diese zur Aufnahme eines Kleinkindes geeignet ist, die Rückwand (12) von der Stützwand (7) weggeschwenkt ist und in Nichtgebrauchslage der Klappe (6) an der Stützwand (7) anliegt, **dadurch gekennzeichnet, dass** zwischen zwei benachbarten vertikalen Stäben (17) der Rückwand (12) eine Erweiterung (18) vorgesehen ist, die beim Zusammenbau der Klappe (6) zum Hindurchführen von einem der Stützfinger (22) bestimmt ist und dass beim Verschwenken der Rückwand (12) die Sitzplatte (20) mit ihrem an die Rückwand (12) angrenzenden Rand (21) an der Innenseite (25) der Rückwand (12) entlanggleitet.

2. Stapelbarer Einkaufswagen nach Anspruch 1. **dadurch gekennzeichnet, dass** die Erweiterung (18) durch Abbiegen oder Abkröpfen eines der vertikalen Stäbe (17) gebildet ist.

3. Stapelbarer Einkaufswagen nach Anspruch 1 oder 2, **dadurch gekennzeichnet, dass** die Breite der Erweiterung (18) größer ist als die Distanz zwischen zwei vertikalen Stäben (17).

4. Stapelbarer Einkaufswagen nach einem der Ansprüche 1 bis 3, **dadurch gekennzeichnet, dass** an der Sitzplatte (20) mehr als zwei Stützfinger (22) vorgesehen sind.

5. Stapelbarer Einkaufswagen nach einem der Ansprüche 1 bis 4, **dadurch gekennzeichnet, dass** an der Stützwand (7) eine die Beinöffnungen (8) verschließende Platte verschwenkbar angeordnet ist.

6. Stapelbarer Einkaufswagen nach einem der Ansprüche 1 bis 5, **dadurch gekennzeichnet, dass** die Vorsprünge (23) der Stützfinger (22) hakenartig ausgebildet sind und den Querstab (14) der Rückwand (7) in Gebrauchslage der Klappe (6) hintergreifen.

## Claims

1. A nestable shopping trolley (1) comprising a basket (3) for holding goods, the rear (5) of the basket (3) being formed by flap (6) which is pivotable into the interior of the basket and is intended to accommodate a small child and which has a supporting wall (7) provided with leg openings (8), a rear wall (12) provided with vertical bars (17) and mounted on the supporting wall (7) so as to be pivotable about a horizontal axis (10), and a seating plate (20) which is mounted on the supporting wall (7) so as to be movable about a horizontal axis (14a) and is supported on the rear wall (12) by means of supporting fingers (22) which engage behind the rear wall (12) in such a way that each supporting finger (22) rests against a vertical bar (17), wherein the rear wall (12) is pivoted away from the supporting wall (7) in the position of use of the flap (6), in which position the latter is suitable for accommodating a small child, and rests against the supporting wall (7) in the position of non-use of the flap (6), **characterised in that** a widening (18) is provided between two adjacent vertical bars (17) of the rear wall (12) and is intended for insertion of one of the supporting fingers (22) during assembly of the flap (6), and **in that**, when the rear wall (12) is pivoted, the edge (16) [sic - 21] of the seating plate (20) adjacent to the rear wall (12) slides along the inside (25) of the rear wall (12).

2. A nestable shopping trolley according to claim 1, **characterised in that** the widening (18) is formed by bending or offsetting one of the vertical bars (17).

3. A nestable shopping trolley according to claim 1 or 2, **characterised in that** the width of the widening (18) is greater than the distance between two vertical bars (17).

4. A nestable shopping trolley according to any one of claims 1 to 3, **characterised in that** more than two supporting fingers (22) are provided on the seating plate (20).

5. A nestable shopping trolley according to any one of claims 1 to 4, **characterised in that** a plate closing the leg openings (8) is pivotably arranged on the supporting wall (7).

6. A nestable shopping trolley according to any one of claims 1 to 5, **characterised in that** the projections (23) of the supporting fingers (22) are formed in the manner of a hook and engage behind the transverse bar (14) of the rear wall (12) when the flap (6) is in the position of use.

## Revendications

1. Chariot à provisions (1) de type imbricable, muni d'un panier (3) destiné à recevoir des marchandises et dont la face postérieure (5) est matérialisée par un clapet (6) qui peut pivoter vers l'intérieur dudit panier, est destiné à recevoir un enfant en bas âge, et comprend une paroi d'appui (7) dotée d'ouvertures (8) de passage des jambes, une paroi postérieure (12) pourvue de barreaux verticaux (17) et montée pivotante sur ladite paroi d'appui (7), autour d'un axe horizontal (10), ainsi qu'un panneau d'assise (20) qui est monté mobile sur la paroi d'appui (7), autour d'un axe horizontal (11a), et prend appui sur la paroi postérieure (12) en emprisonnant celle-ci par-derrière, à l'aide de taquets d'appui (22), de façon telle que chaque taquet d'appui (22) soit appliqué contre un barreau vertical (17), sachant que la paroi postérieure (12) est éloignée de la paroi d'appui (7) par pivotement, en position d'utilisation du clapet (6) dans laquelle ce dernier se prête à la réception d'un enfant en bas âge, et est appliquée contre ladite paroi d'appui (7) en position de non-utilisation dudit clapet (6), **caractérisé par le fait qu'**il est prévu, entre deux barreaux verticaux (17) occupant des positions voisines dans la paroi postérieure (12), un évasement (18) destiné à l'engagement de l'un des taquets d'appui (22) lors de l'assemblage du clapet (6); et **par le fait que**, lors du pivotement de la paroi postérieure (12), le panneau d'assise (20) glisse le long de la face intérieure (25) de ladite paroi postérieure (12) par son bord (21) adjacent à ladite paroi postérieure (12).

2. Chariot à provisions de type imbricable selon la revendication 1, **caractérisé par le fait que** l'évasement (18) est formé en cintrant ou en coudant l'un des barreaux verticaux (17).

3. Chariot à provisions de type imbricable selon la revendication 1 ou 2, **caractérisé par le fait que** la largeur de l'évasement (18) est plus grande que la distance comprise entre deux barreaux verticaux (17).

4. Chariot à provisions de type imbricable selon l'une des revendications 1 à 3, **caractérisé par le fait que** plus de deux taquets d'appui (22) sont prévus sur le panneau d'assise (20).

5. Chariot à provisions de type imbricable selon l'une des revendications 1 à 4, **caractérisé par le fait qu'**un panneau, obturant les ouvertures (8) de passage des jambes, est monté pivotant sur la paroi d'appui (7).

6. Chariot à provisions de type imbricable selon l'une des revendications 1 à 5, **caractérisé par le fait que** les protubérances (23) des taquets d'appui (22) sont réalisées en forme de crochets, et emprisonnent par-derrière la baguette transversale (14) de la paroi postérieure (12) en position d'utilisation du clapet (6).
